# EUROPÄISCHE PATENTANMELDUNG

(11) **EP 2 251 188 A2**
(43) Veröffentlichungstag der Anmeldung: **17.11.2010**
(21) Anmeldenummer: 10004613.5
(22) Anmeldetag: 03.05.2010
(51) Int. Cl.: B30B 5/02

(54) **Presse zum Laminieren von im wesentlichen plattenförmigen Werkstücken**

(30) Priorität: 12.05.2009 DE 102009020991
(71) Anmelder: Robert Bürkle GmbH, 72250 Freudenstadt (DE)
(72) Erfinder: Damm, Norbert, 76689 Karlsdorf-Neuhard (DE)
(74) Vertreter: Lemcke, Brommer & Partner

(57) **Zusammenfassung**

Die Erfindung betrifft eine Presse zum Laminieren von im wesentlichen plattenförmigen Werkstücken unter Druck- und Wärmeeinwirkung, mit einer unteren Pressenhälfte 2 und einer oberen Pressenhälfte 3, welche relativ zueinander bewegbar sind, um die Presse zu öffnen und zu schließen, wobei die untere Pressenhälfte 2 und die obere Pressenhälfte 3 mittels umlaufender, ein- oder mehrteiliger Dichtungen 12, 13 im geschlossenen Zustand eine Vakuumkammer 14 bilden, und mit einer flexiblen Membran 11, die die Vakuumkammer 14 in einen zur Aufnahme von mindestens einem Werkstück 1 vorgesehenen, evakuierbaren Produktraum 16 und einen evakuierbaren und/oder druckbeaufschlagbaren Druckraum 17 unterteilt. Die Membran 11 ist so ausgestaltet und angeordnet, dass sie aufgrund eines durch Evakuieren des Produktraums 16 und/oder durch Druckbeaufschlagen des Druckraums 17 erzeugten Druckunterschieds in der Vakuumkammer 14 das Werkstück 1 direkt oder indirekt gegen eine Unterseite 2 der Vakuumkammer 14 presst. Die flexible Membran 11 ist ein Gewebe oder eine Folie mit gasdichten und biegeweichen, jedoch ganzflächig zugstabilen und somit quasi unelastischen Eigenschaften. Sie ist ferner mit reibungsarmem Material beschichtet und/oder besteht aus einem solchen.

## Beschreibung

Die Erfindung betrifft eine Presse zum Laminieren von im Wesentlichen plattenförmigen Werkstücken unter Druck- und Wärmeeinwirkung nach den Oberbegriffen der Ansprüche 1 und 2, sowie eine flexible Membran für solch eine Presse.

Eine Presse der vorliegenden Art umfasst demnach eine untere Pressenhälfte und eine obere Pressenhälfte, welche relativ zueinander bewegbar sind, um die Presse zu öffnen und zu schließen. Die untere Pressenhälfte und die obere Pressenhälfte bilden in geschlossenem Zustand mittels umlaufender, ein- oder mehrteiliger Dichtungen eine Vakuumkammer, innerhalb der ein oder mehrere Werkstücke laminiert werden. Eine flexible Membran teilt die Vakuumkammer in einen zur Aufnahme von mindestens einem Werkstück vorgesehenen, evakuierbaren Produktraum und einen evakuierbaren und/oder druckbeaufschlagbaren Druckraum. Aufgrund eines durch Evakuieren des Produktraums und/oder durch Druckbeaufschlagen des Druckraums erzeugten Druckunterschieds in der Vakuumkammer wird die Membran gegen das Werkstück gepresst, wodurch sie das Werkstück direkt oder indirekt gegen eine Unterseite der Vakuumkammer drückt und hierdurch die zum Laminieren notwendige Auflast auf das Werkstück aufbringt. In der Regel wird die Unterseite der Vakuumkammer durch eine Heizplatte gebildet, so dass die zum Laminieren notwendige Prozesswärme direkt beim Pressvorgang in das Werkstück eingeleitet wird. Es sind jedoch auch andere Arten des Einbringens der Prozesswärme möglich.

Eine Presse der vorliegenden Art wird bevorzugt zum Laminieren von Photovoltaik-Modulen verwendet. Diese bestehen üblicherweise aus einer Solarzellenschicht, die mitsamt ihren elektrischen Kontaktierungselementen zwischen eine Glasplatte und eine wetterfeste Folie oder zwischen zwei Glasplatten angeordnet und mittels einer oder mehrerer Kleberschichten mit den Glasplatten bzw. Folien laminiert und so feuchtigkeitsdicht sowie wetterfest in einen lichtdurchlässigen Schichtverbund eingekapselt wird.

Um nun ein Werkstück bzw. mehrere Werkstücke gleichzeitig - der Einfachheit halber wird im Folgenden jeweils nur von einem Werkstück gesprochen - zu laminieren, wird dieses in den Produktraum der Vakuumkammer verbracht und die Vakuumkammer geschlossen. Sodann wird normalerweise zunächst der Druckraum der Vakuumkammer evakuiert, um die Membran nach oben zur oberen Kammerhälfte zu ziehen. Danach, üblicherweise mit einem gewissen Zeitversatz, wird auch der Produktraum evakuiert, wobei das Evakuieren beider Räume der Vakuumkammer so geregelt wird, dass immer ein Differenzdruck zwischen dem Druckraum und dem Produktraum bestehen bleibt, der die Membran in der oberen Kammerhälfte hält und verhindert, dass die Membran vorzeitig in Kontakt mit dem Werkstück gelangt.

Wenn der Produktraum der Pressenkammer bis zu einem Solldruck evakuiert worden ist, der in der Regel unterhalb von 1 mbar liegt, wird der Druckraum belüftet, so dass sich die Druckdifferenz zwischen dem Druckraum und dem Produktraum umkehrt und sich die Membran auf das Werkstück auflegt. Durch Regeln des Drucks im Druckraum wird sodann ein gewünschter Anpressdruck der Membran eingestellt, um die für das Laminieren notwendige Auflast auf das Werkstück zu erzeugen.

Die für den Laminiervorgang notwendige Prozesswärme wird üblicherweise dadurch in das Werkstück eingebracht, dass die Unterseite der Vakuumkammer als Heizplatte ausgebildet ist, gegen die das Werkstück durch die Membran gedrückt wird. Der Druck und die Prozesswärme sorgen dann zusammen für das Erweichen bzw. Aktivieren der Kleberschicht und gegebenenfalls für deren Aushärten bzw. Vernetzen.

Das rasche Evakuieren insbesondere des Produktraums der Vakuumkammer - möglichst noch vor einem nennenswerten Erwärmen des Werkstücks - ermöglicht, dass etwaige Lufteinschlüsse (Legeluft zwischen den Werkstückschichten) oder gegebenenfalls beim Erwärmen gebildete Gase aus dem Werkstück herausgezogen werden, bevor ein Härten bzw. Vernetzen des Klebers in der Kleberschicht beginnt. Denn Gasblasen im fertig laminierten Werkstück beeinträchtigen dessen Lebensdauer ganz erheblich oder führen im ungünstigsten Fall zur sofortigen Unbrauchbarkeit des Werkstücks, also zur Produktion von Ausschuss.

Die flexible Membran, die in Pressen der vorliegenden Art verwendet wird, besteht üblicherweise aus einem hochelastischen Material mit einer Elastizität bzw. Reißdehnung von 500 bis 600 %, und zwar zumeist aus Silikon, oder in der Minderzahl der Anwendungsfälle aus Naturkautschuk. Im Hauptanwendungsfall, dem Laminieren von Photovoltaik-Modulen, ist dies bislang ohne Alternative. Denn die ganz überwiegende Mehrheit von Photovoltaik-Modulen enthält eine Solarzellenschicht mit Solarzellen, die aus kristallinen-Siliziumwafern hergestellt sind und meist nicht mehr als 0,1 bis 0,2 mm Matetrialstärke aufweisen. Dementsprechend sind sie sehr bruchempfindlich. Der Aufbau dieser Photovoltaik-Module besteht wiederum in der Mehrzahl aus einem Schichtverbund mit einem Glassubstrat, einer ersten EVA-Kleberfolie, der Solarzellenschicht, einer zweiten EVA-Kleberfolie und einer Rückseitenfolie. Aufgrund der Bruchempfindlichkeit der kristallinen Solarzellen hat sich in der Fachwelt die Meinung durchgesetzt, die zum Verpressen der genannten Schichten beim Laminieren zu verwendenden flexiblen Membrane müssen aus einem hochelastischen und weichen Werkstoff mit einer Shore-Härte < 50 bestehen. Die hochelastischen Eigenschaften sind hierbei vor allem deswegen wichtig, weil die Membran alle im Modulaufbau vorhandenen Unebenheiten, insbesondere diejenigen zwischen den einzelnen Silizium-Solarzellen und deren Verschaltung, ausgleichen soll.

Weiterhin ist ein hochelastisches Material für die flexible Membran auch deswegen notwendig, weil diese mechanisch vorgespannt werden muss, um in jedem Fall faltenfrei auf das Photovoltaik-Modul aufgepresst werden zu können. Denn während des Laminiervorgangs haben insbesondere Photovoltaik-Module der oben genannten Art, also mit einer Rückseitenfolie, eine während des Laminiervorgangs weiche Rückseite, so dass die Membran beim Anpressvorgang auf keinen Fall irgendwelche Falten, Kerben oder Abdrücke hinterlassen darf. Damit jedoch eine vorgespannte Membran die für den Laminiervorgang notwendige Bewegung senkrecht zu ihrer Oberfläche ausführen und so auf das Photovoltaik-Modul aufgepresst werden kann, muss es hochelastische Eigenschaften aufweisen.

Weitere Anforderungen an die flexible Membran ergeben sich aus deren Funktion des gasdichten Aufteilens der Vakuumkammer in einen Druckraum und einen Produktraum: Das Material der Membran muss gasdicht sein. Ferner muss das Material wegen des wärmegeführten Laminierprozesses temperaturbeständig bis etwa 180 °C - 200 °C sein. Letztlich ist auch eine gewisse chemische Beständigkeit gegen die im Photovoltaik-Modul verwendeten Folien und Klebstoffe notwendig.

All die genannten Eigenschaften, die eine flexible Membran nach der im Stand der Technik vorherrschenden Meinung erfüllen muss, werden derzeit am besten und ohne ernsthafte Alternative von Membranen aus Silikon oder aus Naturkautschuk erfüllt. Nachteilig ist hier allerdings, dass Membranen aus diesen Materialien vergleichsweise teuer sind. Hinzu kommt, dass in der Regel lediglich Standzeiten von wenigen tausend Zyklen erzielt werden können. Die Hauptursache hierfür sind, neben mechanischen Einflüssen, die Reaktanten, die die am häufigsten in Photovoltaik-Modulen verwendete Kleberfolie, EVA, beim Laminierprozess freisetzt. Insbesondere Peroxid und Essigsäure scheinen die Membrane aus Silikon und Naturkautschuk in nicht unerheblichem Maße anzugreifen, so dass sich deren Lebensdauer verringert.

Der vorliegenden Erfindung liegt daher die Aufgabe zugrunde, eine flexible Membran für eine Presse der eingangs genannten Art, sowie eine Presse mit dieser flexiblen Membran vorzuschlagen, die preisgünstiger ist und/oder höhere Standzeiten erreichen kann.

Gelöst ist diese Aufgabe durch eine Presse mit den Merkmalen der Ansprüche 1 und 2 sowie durch eine flexible Membran mit den Merkmalen des Ansprüche 11 und 12.

Bevorzugte Ausgestaltungen der erfindungsgemäßen Presse finden sich in den Ansprüchen 3 bis 10; vorteilhafte Ausgestaltungen der erfindungsgemäßen flexiblen Membran sind in den Ansprüchen 13 und 14 niedergelegt.

Im Unterschied zum bisherigen Stand der Technik ist die flexible Membran nach der vorliegenden Erfindung ein Gewebe oder eine Folie mit gasdichten und biegeweichen, jedoch ganzflächig zugstabilen und somit unelastischen Eigenschaften. Die unelastischen Eigenschaften der erfindungsgemäßen flexiblen Membran ergeben sich vorzugsweise durch Wahl eines Materials mit einer Reißdehnung von vorzugsweise unter 60 %, bevorzugt unter 50 % und weiter bevorzugt unter 15 %. Die Reißdehnung der erfindungsgemäßen flexiblen Membran liegt also um vorzugsweise mehr als einen Faktor 10 unterhalb der hochelastischen Membranen nach dem Stand der Technik.

Erfindungsgemäß ist erkannt worden, dass die bisher zwingend vorausgesetzten hochelastischen Materialeigenschaften der Membran gar nicht notwendig sind, um gute Ergebnisse beim Laminieren von vorzugsweise Photovoltaik-Modulen zu erzielen. Lediglich die Gasdichtigkeit, die Temperaturbeständigkeit und eine biegeweiche Flexibilität im Sinne einer Biegsamkeit in der Membran-Ebene, ohne dass eine nennenswerte Dehnbarkeit des Materials in sich möglich ist, reichen, wie erfindungsgemäß erkannt worden ist, vollkommen aus, um gute Ergebnisse beim Laminieren zu erzielen.

Versuche der Anmelderin haben gezeigt, dass beim Belüften des Druckraums in der geschlossenen Presse, währenddessen sich die flexible Membran auf das Werkstück auflegt, um die zum Laminieren erforderliche Auflast auf dieses aufzubringen, die Membran an den Stellen des ersten Kontaktes mit dem Werkstück oder gegebenenfalls einer zwischenliegenden Trennfolie durch den guten Reibschluss der gummiartigen Oberfläche des bislang verwendeten Silikons oder Naturkautschuks nahezu unverrückbar haftet. Jede weitere Membranbewegung zum Werkstück hin erzeugt in der Membran daraufhin lokale Dehnungen, die am Rand des zu laminierenden Moduls erhebliche elastische Kräfte erzeugen können, wodurch sich ein Verschieben der einzelnen Modulschichten gegeneinander ergeben kann, sobald die Kleberschichten über ihre Erweichungstemperatur erwärmt sind. Insbesondere die Solarzellen eines Photovoltaik-Moduls beginnen oft im Modul zu "schwimmen", wenn die Erweichungstemperatur der Kleberschichten unter Auflast durch eine hochflexible Membran überschritten wird.

Die Verwendung einer erfindungsgemäß unelastischen, flexiblen Membran zum Aufbringen des Anpressdrucks auf das Werkstück während des Laminierprozesses verringert die Kräfte, die auf den Rand des Werkstücks einwirken, da sich die unelastische flexible Membran nicht so leicht und selbstverständlich an die Werkstückkanten anlegt, wie dies eine hochelastische Membran tut. Gleichwohl hat sich überraschend herausgestellt, dass die Laminierergebnisse genauso gut oder sogar besser sind, als diejenigen, die mit einer hochelastischen, flexiblen Membran nach dem Stand der Technik erzielt worden sind, jedenfalls dann, wenn die Membran erfindungsgemäß mit reibungsarmem Material beschichtet ist und/der aus einem reibungsarmen Material besteht.

Durch die unelastische Ausbildung der flexiblen Membran wird darüber hinaus ein weiterer Nachteil einer bekannten hochelastischen flexiblen Membran beseitigt: Eine hochelastische Membran legt sich beim Belüften der Druckkammer sofort auf die dem Werkstück benachbarte Fläche des Produktraumes auf und schmiegt sich eng allseitig an das Werkstück an. Das Werkstück wird hierdurch gasdicht abgedichtet, so dass etwa noch vorhandene Restluft, aber vor allem Gase, die beim Laminieren entstehen (Restfeuchtigkeit, Katalysatorgase, dampfförmige Weichmacher und dergleichen) nicht aus dem Werkstück entweichen und abgesaugt werden können. Eine zwar flexible, aber nicht oder quasi nicht elastische Membran, wie sie in der vorliegenden Erfindung vorgeschlagen wird, zeigt diesen Effekt nicht oder nur deutlich abgeschwächt. Aufgrund ihrer schlechten Elastizität schmiegt sich die flexible Membran nach der vorliegenden Erfindung nicht ganz so eng und vor allem nicht so schnell allseitig an die Ränder des Werkstücks an.

Die flexible Membran nach der vorliegenden Erfindung kann aus Kunststoff und/oder Metall bestehen; vorzugsweise ist sie aus einem dicht gewebten Tuchaus Industriefasern gefertigt. Solche Industriefasern bestehen vorzugsweise aus Aramid, Glasfaser, PTFE, PC oder dergleichen, oder aber sie können aus Metallfäden oder kunststoffummantelten Metallfäden gebildet sein. Auch eine Mischung dieser Materialien ist möglich. Diese Ausführungen einer erfindungsgemäß ausgestalteten flexiblen Membran sind sehr viel kostengünstiger als die bisher verwendeten Silikon- oder Naturkautschuk-Membranen, bei einer gleichzeitig sehr viel höheren Standzeit, da die entsprechend vorgeschlagenen Materialien deutlich weniger empfindlich auf die aus den Kleberfolien entweichenden Reaktanten sind.

Die flexible Membran nach der vorliegenden Erfindung kann eine Materialstärke von < ca. 1 mm, vorzugsweise zwischen ca. 0,25 und ca. 5 mm aufweisen. Dies hat positiven Einfluss auf die vorteilhaft geringen Kosten der vorgeschlagenen Membran sowie auf die nach wie vor notwendigen flexiblen Materialeigenschaften.

Die im Rahmen der vorliegenden Erfindung vorgeschlagene flexible Membran ist besonders bevorzugt zumindest an ihrer dem Werkstück zugewandten Seite mit PTFE beschichtet, während sie auf der dem Werkstück abgewandten Seite beispielsweise eine Auflage mit einer gasundurchlässigen, gummiartige Schicht aufweist, um die Gasdichtigkeit herzustellen. Letzteres ist besonders dann sinnvoll, wenn es sich bei der flexiblen Membran um ein Gewebeband handelt.

Die Beschichtung der Membran mit PTFE stellt sicher, dass die Membran von aus den Kleberfolien ausgasenden Reaktanten nicht mehr negativ beeinflusst wird, und ermöglicht darüber hinaus, dass die Reibung zwischen der flexiblen Membran und dem Werkstück bzw. einer Trennfolie gegenüber dem bisherigen Stand der Technik um ein Vielfaches abnimmt, so dass ein Gegeneinander-Gleiten während des Belüftens der Druckkammer jederzeit möglich ist und Beschädigungen des Werkstücks durch Anhaften der flexiblen Membran nicht mehr zu befürchten sind.

Weitere besondere Vorteile ergeben sich, wenn die flexible Membran derart schlaff durchhängend in der Presse befestigt wird, dass sie bei geschlossener Presse und ausgeglichenem Druck in Produktraum und Druckraum zumindest teilweise auf dem Werkstück aufliegt, also bis zu diesem durchhängt. Dies ermöglicht, dass die Membran trotz ihrer unelastischen Eigenschaften beim Evakuieren der Vakuumkammer wie bisher durch einen entsprechend gewählten Druckunterschied zwischen dem Druckraum und dem Produktraum nach oben vom Werkstück weggezogen werden kann, während sie beim Belüften des Druckraums den notwendigen Weg bis zum Werkstück zurücklegen kann, um aufgrund des immer größer werdenden Druckunterschieds zwischen dem Druckraum und dem Prozessraum die Auflast auf das Werkstück aufzubringen.

Zweckmäßigerweise ist die flexible Membran hierfür zwischen einer oberen Hälfte und einer unteren Hälfte eines zweiteiligen Membranrahmens befestigt, wobei der Membranrahmen an der oberen Pressenhälfte angebracht ist. Hierdurch ergibt sich von selbst ein Abstand zwischen der Ebene, in der die Membran befestigt ist, und der Oberfläche des Werkstücks, der für das Beschicken der Presse erforderlich ist.

Wie oben erwähnt, müssen hochelastische flexible Membranen nach dem Stand der Technik unter Vorspannung gesetzt werden, bevor sie sich durch Belüften des Druckraums auf das Werkstücks auflegen. Dies ist wichtig, um jegliche Faltenbildung auf dem Werkstück zu vermeiden. Die hierfür erforderlichen Spannelemente an der Membranhalterung von Pressen nach dem Stand der Technik sind allerdings relativ aufwendig und dementsprechend kostenintensiv.

Da die erfindungsgemäß vorgeschlagene flexible Membran im Wesentlichen unelastisch ist und vorzugsweise werkstückseitig mit PTFE oder einem ähnlichen reibungsarmen Material beschichtet ist oder gegebenenfalls teilweise oder ganz aus einem solchen Material besteht, ist eine Faltenbildung auch dann nicht zu befürchten, wenn die Membran im Ausgangszustand schlaff auf dem Werkstück aufliegt bzw. bis zu diesem herunterhängt. Etwaige Falten, die trotz der geringen Elastizität der Membran entstehen sollten, werden beim Ansaugen durch Evakuieren des Produktraums bzw. durch Belüften des Druckraums dann glattgezogen.

Mit einer erfindungsgemäß vorgeschlagenen flexiblen, jedoch quasi unelastischen Membran können nicht nur Kosteneinsparungen durch die geringen Beschaffungskosten der Membran selbst, durch den Wegfall von Spannelementen und zeitraubenden Spannvorgängen und die deutlich höhere Standzeit der Membran erzielt werden, sondern außerdem noch bessere Ergebnisse beim Laminieren von insbesondere Photovoltaik-Modulen. Ferner können die flexiblen Membrane nunmehr nach den erforderlichen Eigenschaften "maßgeschneidert" werden, insbesondere durch die Wahl von Materialien für Gewebe-Membrane, beispielsweise Kunststoff, Metall oder Glasfaser.

Ein Ausführungsbeispiel für eine erfindungsgemäß ausgestaltete Presse wird im folgenden anhand der beigefügten Zeichnungen näher beschrieben und erläutert. Es zeigen:
- Figur 1: eine schematische Schnittdarstellung einer erfindungsgemäß ausgestalteten Presse, quer zur Durchlaufrichtung, in geöffnetem Zustand;
- Figur 2: eine Darstellung wie Figur 1, jedoch im geschlossenen Zustand,
- Figur 3: eine Darstellung wie Figur 1, jedoch während des eigentlichen Laminierprozesses.

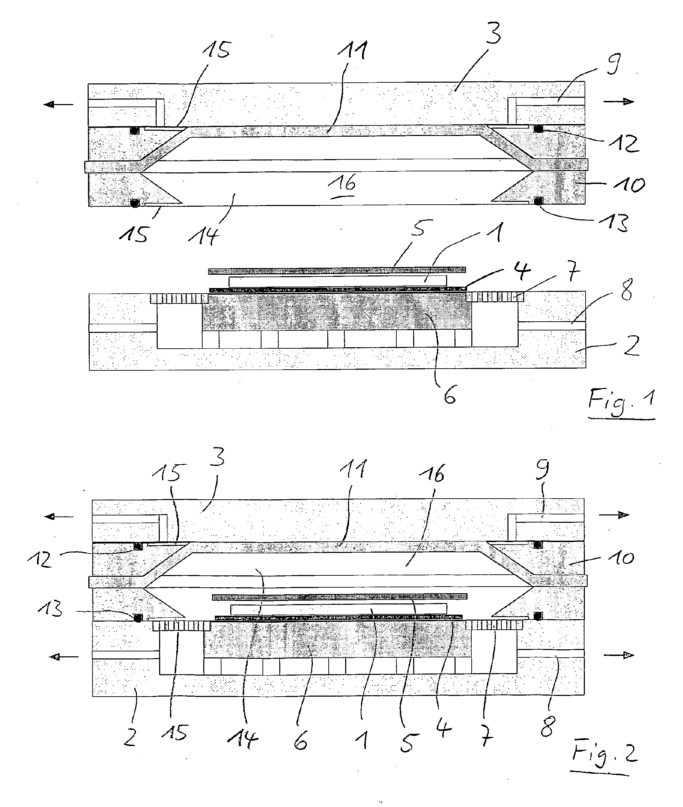

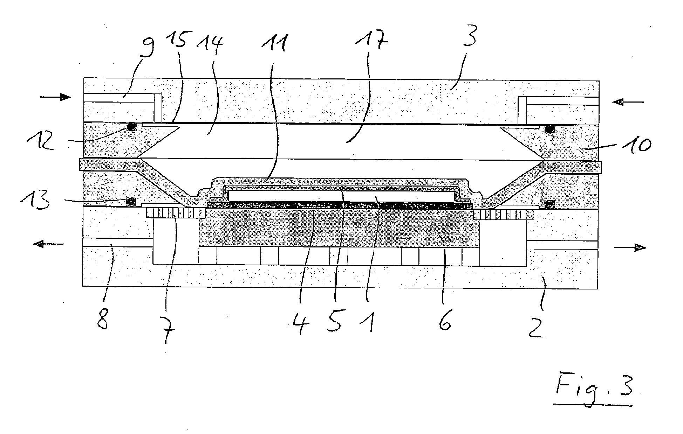

Die Figuren 1, 2 und 3 zeigen schematisch eine Schnittdarstellung durch eine erfindungsgemäß ausgestaltete Presse zum Laminieren eines Photovoltaik-Moduls 1, wobei die Durchlaufrichtung des Photovoltaik-Moduls 1 senkrecht zur Zeichenebene liegt, und wobei Figur 1 eine geöffnete Presse beim Beschicken, Figur 2 eine geschlossene Presse beim Evakuieren und Figur 3 eine geschlossene Presse beim eigentlichen Laminiervorgang zeigen.

In der Presse, die aus einer unteren Pressenhälfte 2 und einer oberen Pressenhälfte 3 gebildet ist, ist ein Photovoltaik-Modul 1 zwischen einem Förderband 4 und einer Trennfolie 5 angeordnet. Das Förderband 4 liegt auf der unteren Pressenhälfte 2 auf, die in diesem Bereich eine Heizplatte 6 aufweist, um die benötigte Prozesswärme in das Photovoltaik-Modul 1 einzubringen. In Durchlaufrichtung gesehen seitlich neben der Heizplatte 6 befinden sich in der unteren Pressenhälfte 2 mehrere Absaugöffnungen 7, die in unteren Kanälen 8 münden. Die unteren Kanäle 8 sind mit (hier nicht dargestellten) Evakuierungs- und Belüftungsmittein verbunden. Das Transportband 4 dient dazu, das Photovoltaik-Modul 1 in die Presse einzubringen und aus dieser wieder herauszufördern, so dass es die Presse senkrecht zur Zeichenebene durchgreift.

Die obere Pressenhälfte 3 ist mit oberen Kanälen 9 zum Evakuieren, Belüften oder Druckbeaufschlagen versehen, und sie trägt einen Doppelrahmen 10, in dem eine Membran 11 geklemmt ist. Der Doppelrahmen 10 bildet mit oberen 12 und unteren, umlaufenden Dichtungen 13, die jeweils gegen die obere Pressenhälfte 3 und die untere Pressenhälfte 2 abdichten, eine mehrteilige Dichtung zum gasdichten Verschließen der Presse, wobei er in seinem Inneren, zusammen mit den angrenzenden Pressenhälften 2, 3, eine Vakuumkammer 14 umschreibt. Mittels Aussparungen 15 steht die Vakuumkammer 14 mit den unteren und oberen Kanälen 8, 9 in Verbindung. Die Membran 11 teilt die Vakuumkammer 14 hierbei gasdicht in einen unterhalb der Membran liegenden Produktraum 16, der mit den unteren Kanälen 8 in Verbindung steht; und in einen oberhalb der Membran 11 liegenden Druckraum 17, der mit den oberen Kanälen 9 verbunden ist.

Figur 1 zeigt nun die Phase, in der das Photovoltaik-Modul 1 auf dem Transportband 4 mit aufliegender Trennfolie 5 in den Bereich der Vakuumkammer 14 in die Presse eingefahren worden ist; die Presse ist hierbei noch geöffnet. Um die Membran 11 vor mechanischen Beschädigungen zu schützen, wird sie über die oberen Kanäle 9 an die obere Pressenhälfte 3 angesaugt.

Durch Absenken der oberen Pressenhälfte 3 wird die Presse sodann geschlossen, wie Figur 2 zeigt. Über die oberen Kanäle 9 und die unteren Kanäle 8 wird die Vakuumkammer 14 evakuiert, wobei allerdings darauf geachtet wird, dass der Druck oberhalb der Membran 11 geringer ist, als derjenige unterhalb der Membran 11, so dass die Membran 11 nach oben zur oberen Pressenhälfte 3 hin gezogen bleibt. Hierdurch ist in Figur 2 lediglich der Produktraum 16 sichtbar, jedoch nicht der Druckraum 17.

Nachdem der Produktraum 16 bis auf einen Enddruck von etwa 1 mbar evakuiert worden ist, wird der Druckraum 17 über die oberen Kanäle 9 belüftet, so dass sich die in Figur 3 gezeigte Situation ergibt. Die Membran 11 legt sich aufgrund des herrschenden Druckunterschieds auf das Photovoltaik-Modul 1 auf und presst dieses gegen die Heizplatte 6. Die Trennfolie 5 verhindert hierbei einen direkten Kontakt der Membran 11 mit dem Photovoltaik-Modul 1, so dass dort etwa austretender Klebstoff nicht an die Membran 11 gelangen kann. Die in Figur 3 gezeigte Phase ist die eigentliche Laminierphase, in der das Photovoltaik-Modul 1 mittels der Membran 11 zusammengepresst wird, während es von der Heizplatte 6 durch das Transportband 4 hierdurch mit Wärme beaufschlagt wird.

Im Unterschied zum Stand der Technik handelt es sich bei der flexiblen Membran 11 dieses Ausführungsbeispiels nicht um eine hochelastische Membran aus Silikon oder Naturkautschuk, sondern um eine ganzflächige lediglich in der Membran-Ebene biegsame, also biegweiche, jedoch quasi-unelastische, da kaum dehnbare Membran aus einem Aramid-Gewebe mit einer produktseitigen reibungsarmen Beschichtung aus PTFE und einer rückseitigen Auflage mit einer gasundurchlässigen, gummiartigen Schicht. Auch die Trennfolie 5 ist PTFE-beschichtet, so dass beim Laminierprozess (Figur 3) im Schichtverbund der Membran 11, der Trennfolie 5 und des Photovoltaik-Moduls 1 sehr reibungsarme Oberflächen aufeinanderliegen, wodurch eine Faltenbildung sicher vermieden wird. Verformungen im Photovoltaik-Modul 1 sind hierdurch ebenfalls nicht mehr zu befürchten. Auch das Entgasen des unmittelbaren Volumens des Photovoltaik-Moduls 1 über die Absaugöffnungen 7 ist verbessert.

Wie den Figuren 1 und 2 zu entnehmen ist, ist die Membran 11 nicht etwa wie im Stand der Technik im Doppelrahmen 10 gespannt, sondern dort lediglich schlaff befestigt. Hierdurch ist es trotz der fehlenden Elastizität der Membran 11 möglich, diese während des Beschickens (Figur 1) sowie während des Evakuierens (Figur 2) durch Anlegen von Vakuum über die oberen Kanäle 9 nach oben gegen die obere Pressenhälfte 3 zu ziehen und dort zu halten, bis der Druckraum 17, wiederum über die oberen Kanäle 9 belüftet wird. Auch der in Figur 3 dargestellte Zustand der flexiblen Membran 11 wird dadurch ermöglicht, dass diese schlaff im Doppelrahmen 10 gehalten ist. Denn eine Dehnung der Membran 11 ist erfindungsgemäß nur in engen Grenzen möglich - was andererseits, wie oben ausführlich beschrieben, in den Randzonen des Photovoltaik-Moduls 1 wiederum Vorteile hat, denn dort legt sich die Membran 11 nicht ganz so leicht auf, wie eine hochelastische Membran nach dem Stand der Technik.

Die beschriebene Ausgestaltung der flexiblen Membran 11 des vorliegenden Ausführungsbeispiels gewährleistet eine hohe chemische Beständigkeit gegen ausgasende Reaktanten sowie eine hohe mechanische Festigkeit, so dass die Standzeit dieser Membran 11 gegenüber dem Stand der Technik deutlich erhöht ist. Gleichzeitig ist deren Fertigung relativ einfach, was Kostenvorteile bietet. Schließlich ist es sehr viel einfacher, die Membran 11 erfindungsgemäß schlaff in den Doppelrahmen 10 einzusetzen, als eine hochelastische Membran nach dem Stand der Technik im Doppelrahmen 10 zu spannen, sowie gegebenenfalls vorzuheizen und nochmals nachzuspannen, bevor der eigentliche Laminierprozess beginnt.

## Patentansprüche

1. Presse zum Laminieren von im wesentlichen plattenförmigen Werkstücken unter Druck- und Wärmeeinwirkung, mit einer unteren Pressenhälfte (2) und einer oberen Pressenhälfte (3), welche relativ zueinander bewegbar sind, um die Presse zu öffnen und zu schließen, wobei die untere Pressenhälfte (2) und die obere Pressenhälfte (3) mittels umlaufender, ein- oder mehrteiliger Dichtungen (12, 13) im geschlossenen Zustand eine Vakuumkammer (14) bilden, und mit einer flexiblen Membran (11), die die Vakuumkammer (14) in einen zur Aufnahme von mindestens einem Werkstück (1) vorgesehenen, evakuierbaren Produktraum (16) und einen evakuierbaren und/oder druckbeaufschlagbaren Druckraum (17) unterteilt, wobei die Membran (11) so ausgestaltet und angeordnet ist, dass sie aufgrund eines durch Evakuieren des Produktraums (16) und/oder durch Druckbeaufschlagen des Druckraums (17) erzeugten Druckunterschieds in der Vakuumkammer (14) das Werkstück (1) direkt oder indirekt gegen eine Unterseite (2) der Vakuumkammer (14) presst,
**dadurch gekennzeichnet,**
**dass** die flexible Membran (11) ein Gewebe oder eine Folie mit gasdichten und biegeweichen, jedoch zugstabilen und somit quasi unelastischen Eigenschaften ist.

2. Presse zum Laminieren von im wesentlichen plattenförmigen Werkstücken unter Druck- und Wärmeeinwirkung, mit einer unteren Pressenhälfte (2) und einer oberen Pressenhälfte (3), welche relativ zueinander bewegbar sind, um die Presse zu öffnen und zu schließen, wobei die untere Pressenhälfte (2) und die obere Pressenhälfte (3) mittels umlaufender, ein- oder mehrteiliger Dichtungen (12, 13) im geschlossenen Zustand eine Vakuumkammer (14) bilden, und mit einer flexiblen Membran (11), die die Vakuumkammer (14) in einen zur Aufnahme von mindestens einem Werkstück (1) vorgesehenen, evakuierbaren Produktraum (16) und einen evakuierbaren und/oder druckbeaufschlagbaren Druckraum (17) unterteilt, wobei die Membran (11) so ausgestaltet und angeordnet ist, dass sie aufgrund eines durch Evakuieren des Produktraums (16) und/oder durch Druckbeaufschlagen des Druckraums (17) erzeugten Druckunterschieds in der Vakuumkammer (14) das Werkstück (1) direkt oder indirekt gegen eine Unterseite (2) der Vakuumkammer (14) presst,
**dadurch gekennzeichnet,**
**dass** die flexible Membran (11) ein Gewebe oder eine Folie mit gasdichten, biegeweichen sowie ganzflächig zugstabilen und somit quasi unelastischen Eigenschaften ist, und dass die flexible Membran (11) mit reibungsarmem Material beschichtet ist und/oder aus einem solchen besteht.

3. Presse nach Anspruch 2,
**dadurch gekennzeichnet,**
**dass** die flexible Membran (11) aus Kunststoff und/oder Metall besteht.

4. Presse nach einem der Ansprüche 1 oder 3,
**dadurch gekennzeichnet,**
**dass** die flexible Membran (11) aus einem dicht gewebten Tuch aus Industriefasern besteht.

5. Presse nach Anspruch 4,
**dadurch gekennzeichnet,**
**dass** die Industriefasern aus Aramid, Glasfaser, PTFE, PC oder dergleichen bestehen, oder aus Metallfäden oder kunststoffummantelten Metallfäden gebildet sind.

6. Presse nach mindestens einem der Ansprüche 1 bis 5,
**dadurch gekennzeichnet,**
**dass** die flexible Membran (11) zumindest an ihrer dem Werkstück (1) zugewandten Seite mit PTFE beschichtet ist.

7. Presse nach mindestens einem der Ansprüche 1 bis 6,
**dadurch gekennzeichnet,**
**dass** die flexible Membran (11) eine Materialstärke von kleiner als ca. 1 mm, vorzugsweise zwischen ca. 0,25 mm und ca. 0,5 mm aufweist.

8. Presse nach mindestens einem der Ansprüche 1 bis 7,
**dadurch gekennzeichnet,**
**dass** die flexible Membran (11) aus einem Material mit einer Reißdehnung von unter 60 %, vorzugsweise unter 50 %, weiter bevorzugt unter 15 % besteht.

9. Presse nach mindestens einem der Ansprüche 1 bis 8,
**dadurch gekennzeichnet,**
**dass** die flexible Membran (11) derart schlaff durchhängend in der Presse befestigt ist, dass sie bei geschlossener Presse und ausgeglichenem Druck im Produktraum (16) und im Druckraum (17) zumindest teilweise auf dem Werkstück (1) aufliegt.

10. Presse nach Anspruch 9,
**dadurch gekennzeichnet,**
**das** die flexible Membran (11) zwischen einer oberen Hälfte und einer unteren Hälfte eines zweiteiligen Membranrahmens (10) befestigt ist, wobei der Membranrahmen (10) an der oberen Pressenhälfte (3) angebracht ist.

11. Flexible Membran zum Einsatz in einer Presse nach mindestens einem der Ansprüche 1 bis 10,
**dadurch gekennzeichnet,**
**dass** sie ein Gewebe oder eine Folie mit gasdichten und biegeweichen, jedoch zugstabilen und somit quasi unelastischen Eigenschaften ist.

12. Flexible Membran zum Einsatz in einer Presse nach mindestens einem der Ansprüche 1 bis 11,
**dadurch gekennzeichnet,**
**dass** sie ein Gewebe oder eine Folie mit gasdichten und biegeweichen sowie ganzflächig zugstabilen und somit quasi unelastischen Eigenschaften ist, und dass sie mit reibungsarmem Material beschichtet ist und/oder aus einem solchen besteht.

13. Flexible Membran nach Anspruch 12,
**dadurch gekennzeichnet,**
**dass** sie aus einem Material mit einer Reißdehnung von unter 60 %, vorzugsweise unter 50 %, weiter bevorzugt unter 15 % besteht.

14. Flexible Membran nach einem der Ansprüche 12 oder 13,
**dadurch gekennzeichnet,**
**dass** sie ein Gewebeband mit gasdichten Auflagen ist.
